(19)

Europäisches Patentamt

European Patent Office

Office européen des brevets

(11) **EP 4 672 376 A1**

(12) **EUROPEAN PATENT APPLICATION**
published in accordance with Art. 153(4) EPC

(43) Date of publication:
**31.12.2025 Bulletin 2026/01**

(21) Application number: **24863129.3**

(22) Date of filing: **30.08.2024**

(51) International Patent Classification (IPC):
**H01M 4/525** (2010.01)   **H01M 4/505** (2010.01)
**H01M 4/58** (2010.01)   **H01M 4/36** (2006.01)
**H01M 10/052** (2010.01)   **C01G 53/00** (2025.01)
**G01N 9/02** (2006.01)   **H01M 4/02** (2006.01)

(52) Cooperative Patent Classification (CPC):
**C01G 53/00; G01N 9/02; H01M 4/02; H01M 4/36;**
**H01M 4/505; H01M 4/525; H01M 4/58;**
**H01M 10/052; Y02E 60/10**

(86) International application number:
**PCT/KR2024/013000**

(87) International publication number:
**WO 2025/053548 (13.03.2025 Gazette 2025/11)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **04.09.2023   KR 20230116895**
**04.09.2023   KR 20230116896**
**29.08.2024   KR 20240116537**
**29.08.2024   KR 20240116538**

(71) Applicant: **LG Energy Solution, Ltd.**
**Seoul 07335 (KR)**

(72) Inventors:
• **YUN, Kyung Sun**
**Daejeon 34122 (KR)**
• **LEE, Boram**
**Daejeon 34122 (KR)**
• **KIM, Seung Il**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE MATERIAL, SECONDARY BATTERY COMPRISING SAME, AND METHOD FOR MEASURING PARTICLE STRENGTH OF CATHODE MATERIAL**

(57)   The present invention relates to a cathode material, a secondary battery including the same, and a method of measuring the particle strength of a cathode material. More particularly, the present invention relates to a cathode material including one or more selected from the group consisting of lithium cobalt oxide; lithium manganese oxide; a lithium iron phosphate compound; lithium nickel cobalt aluminum oxide (NCA); lithium nickel oxide (LNO); a nickel manganese-based lithium composite metal oxide obtained by replacing a part of nickel (Ni) with manganese (Mn) in the lithium nickel oxide; a lithium composite transition metal oxide (NCM) obtained by replacing a part of nickel (Ni) with manganese (Mn) and cobalt (Co) in the lithium nickel oxide; and a lithium composite transition metal oxide (NCMA) in which aluminum (Al) is added to the lithium composite transition metal oxide (NCM), wherein the cathode material satisfies at least one of Equations 1 to 4 below:

[Equation 1]

$$1.58 \geq \text{del\_PD\_absolute} \geq 1,$$

wherein del_PD_absolute is an absolute value difference between an ideal value and measured value of rolling density when a load is 9,000 kgf;

[Equation 2]

$$0.3 \geq \text{del\_PD} \geq 0.2,$$

wherein del_PD is a normalized value difference between an ideal value and measured value of rolling density when a load is 9,000 kgf;

[Equation 3]

$$0.21 \geq del\_inclination \geq 0.15,$$

wherein del_inclination is an inclination difference between an ideal value and measured value of rolling density at a load of 0 to 9,000 kgf; and

[Equation 4]

$$(1 - del\_PD)/EMD \geq 10.1,$$

wherein del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none, and a secondary battery including the cathode material.

According to the present invention, the present invention has an effect of providing a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging, and a secondary battery including the cathode material. In addition, the present invention has an effect of providing a method of easily measuring the particle strength of a cathode material with high crystallinity.

FIG. 1

- Del_PD = 0.24367
- Del_PD_absolute = 1.11541
- Del_inclin= 0.15934
- (1-del_PD)/EMD = 20.3146

**Description**

[Technical Field]

[Cross-Reference to Related Applications]

This application claims priority to Korean Patent Application No. 10-2023-0116895, filed on September 04, 2023, and Korean Patent Application No. 10-2023-0116896, filed on September 04, 2023, and Korean Patent Application No. 10-2024-0116537, re-filed on August 29, 2024, and Korean Patent Application No. 10-2024-0116538, re-filed on August 29, 2024, based on the priority of the above patents, respectively, in the Korean Intellectual Property Office, the disclosures of each of which are incorporated herein by reference.

The present invention relates to a cathode material, a secondary battery including the same, and a method of measuring the particle strength of a cathode material. More particularly, the present invention relates to a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging and a secondary battery including the cathode material. In addition, the present invention relates to a method of easily measuring the particle strength of a cathode material with high crystallinity.

[Background Art]

A lithium secondary battery is mainly composed of a cathode having metal foil such as aluminum coated with a cathode active material layer, an anode having metal foil such as copper coated with an anode active material layer, and an electrolyte solution that allows lithium ions to move between the cathode and anode.

Cathode active materials (hereinafter also referred to as 'cathode materials') used in the cathode active material layer include lithium cobalt oxide ($LiCoO_2$), lithium nickel oxide ($LiNiO_2$), lithium manganese oxide ($LiMnO_2$), lithium iron phosphate compound ($LiFePO_4$), and the like. Thereamong, lithium cobalt oxide ($LiCoO_2$) is widely used as a high-voltage cathode active material due to high operating voltage and excellent capacity characteristics thereof. However, due to the high cost and unstable supply of cobalt (Co), there are limitations in applying lithium cobalt oxide to large-capacity lithium secondary batteries included in electric vehicles.

To solve these problems, a lithium composite transition metal oxide (hereinafter referred to as 'NCM cathode active material') obtained by replacing a part of cobalt (Co) with nickel (Ni) and manganese (Mn) in the lithium cobalt oxide has been developed. However, the lithium composite transition metal oxide has a secondary particle shape in which primary particles are aggregated. In addition, the lithium composite transition metal oxide easily generates fine particles due to particle breakage during an electrode manufacturing process, generates gases during the operation of a secondary battery due to a large specific surface area and a high content of lithium byproducts, has poor thermal stability, and deteriorates battery performance such as lifespan characteristics in a high-voltage environment.

In addition, a particle strength meter is generally used to easily measure the particle strength of the cathode active material. However, there is a problem in that although it is possible to measure the particle strength of secondary particles of a cathode active material with low crystallinity, it is impossible to measure the strength of single particles of a cathode active material with high crystallinity.

[Disclosure]

[Technical Problem]

Therefore, the present invention has been made in view of the above problems, and it is one object of the present invention to provide a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging and a secondary battery including the cathode material.

It is another object of the present invention to provide a method of easily measuring the particle strength of a cathode material with high crystallinity.

The above and other objects can be accomplished by the present invention described below.

[Technical Solution]

I) In accordance with one aspect of the present invention, provided is a cathode material including one or more selected from the group consisting of lithium cobalt oxide; lithium manganese oxide; a lithium iron phosphate compound; lithium nickel cobalt aluminum oxide (NCA); lithium nickel oxide (LNO); a nickel manganese-based lithium composite metal oxide obtained by replacing a part of nickel (Ni) with manganese (Mn) in the lithium nickel oxide; a lithium composite transition metal oxide (NCM) obtained by replacing a part of nickel (Ni) with manganese (Mn) and cobalt (Co) in the lithium nickel oxide; and a lithium composite transition metal oxide (NCMA) in which aluminum (Al) is added to the lithium composite transition metal oxide (NCM), having a monomodal particle size distribution, has a crystal size of 216.2 nm or more as measured by XRD, and containing cobalt (Co) and manganese (Mn) in a molar ratio of 1: 0.5 to 2.5.

II) In accordance with another aspect of the present invention, provided is a cathode material including lithium cobalt oxide; lithium manganese oxide; a lithium iron phosphate compound; lithium nickel cobalt aluminum oxide (NCA); lithium nickel oxide (LNO); a nickel manganese-based lithium composite metal oxide obtained by replacing a part of nickel (Ni) with manganese (Mn) in the lithium nickel oxide; a lithium composite transition metal oxide (NCM) obtained by replacing a part of nickel (Ni) with manganese (Mn) and cobalt (Co) in the lithium nickel oxide; and a lithium composite transition metal oxide (NCMA) in which aluminum (Al) is added to the lithium composite transition metal oxide (NCM) and satisfying at least one of Equations 1 to 4 below:

[Equation 1]

$$1.58 \geq \text{del\_PD\_absolute} \geq 1,$$

wherein del_PD_absolute is an absolute value difference between an ideal value and measured value of rolling density when a load is 9,000 kgf.

[Equation 2]

$$0.3 \geq \text{del\_PD} \geq 0.2,$$

wherein del_PD is a normalized value difference between an ideal value and measured value of rolling density when a load is 9,000 kgf.

[Equation 3]

$$0.21 \geq \text{del\_inclination} \geq 0.15,$$

wherein del_inclination is an inclination difference between an ideal value and measured value of rolling density at a load of 0 to 9,000 kgf.

[Equation 4]

$$(1 - \text{del\_PD})/\text{EMD} \geq 10.1,$$

wherein del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none).

III) According to I) or II), the cathode material may have a monomodal particle size distribution.

IV) According to I) to III), in the cathode material, a molar ratio of total transition metals to lithium may be 1: 1 to 1.05.

V) According to I) to IV), the cathode material may have a crystal size of 216.2 nm or more as measured by XRD.

VI) According to I) to V), based on 100 mol% in total of other metals other than lithium (Li), the cathode material may include nickel (Ni) in an amount of 65 mol% or more.

VII) According to I) to VI), the cathode material may contain cobalt (Co) and manganese (Mn), and a molar ratio of cobalt to manganese may be 1: 0.5 to 2.5.

VIII) According to I) to VII), the cathode material may be a compound represented by Chemical Formula 1 below.

$$[\text{Chemical Formula 1}] \qquad Li_aNi_xMn_yCo_zM_wO_{2+\delta},$$

wherein M includes one or more selected from the group consisting of B, W, Al, Ti, and Mg; and $1<a\leq1.1$, $0<x<0.95$, $0<y<0.8$, $0<z<1.0$, $0\leq w\leq0.1$, $-0.02\leq\delta\leq0.02$, and $x+y+z+w=1$.

IX) According to I) to VIII), the cathode material may have an EDM (Earth Mover's Distance) value of 0.071 or less as obtained using an SciPy's Wasserstein_distance function (u_values=particle distribution before rolling, v_values=particle distribution after rolling, u_weights=none, v_weights=none).

X) According to I) to IX), the cathode material may be a single particle.

XI) According to I) to X), a surface of the cathode material may be coated with a coating agent containing metal or carbon.

XII) In accordance with still another aspect of the present invention, provided is a secondary battery including the cathode material according to I) to XI).

XIII) In accordance with still another aspect of the present invention, provided is a method of measuring the particle strength of a cathode material, the method including A) measuring a rolling density of a cathode material using a powder resistance meter at a load of 0 kgf to 2,000 kgf, or a load of 0 kgf or more to less than 2,000 kgf; B) measuring a rolling density of the cathode material using a hydraulic press machine at a load of greater than 2,000 kgf or a load of 2,000 kgf or more; and C) using the rolling density of the cathode material measured in steps A) and B) to measure an absolute value difference (del_PD_absolute) between an ideal value and measured value of the rolling density, a normalized value difference (del_PD) between an ideal value and measured value of the rolling density, an inclination difference (del_inclination) value between an ideal value and measured value of the rolling density, or particle distribution before and after rolling and using an SciPy's Wasserstein_distance function (u_values=particle distribution before rolling, v_values=particle distribution after rolling, u_weights=none, v_weights=none) to obtain EMD.

XIV) According to XIII), the cathode material may be a compound represented by Chemical Formula 1 below.

$$[\text{Chemical Formula 1}] \qquad Li_aNi_xMn_yCo_zM_wO_{2+\delta}$$

In Chemical Formula 1, M includes one or more selected from the group consisting of B, W, Al, Ti, and Mg; and $1<a\leq1.1$, $0<x<0.95$, $0<y<0.8$, $0<z<1.0$, $0\leq w\leq0.1$, $-0.02\leq\delta\leq0.02$, and $x+y+z+w=1$.

XV) According to XIII) or XIV), the particle may be a single particle.

XVI) According to XIII) to XV), in step B), a rolling density of a cathode material may be measured using a hydraulic press machine at a load of greater than 2,000 kgf to 9,000 kgf or less, or a load of 2,000 kgf to 9,000 kgf.

XVII) In accordance with yet another aspect of the present invention, provided is a cathode material that is a compound represented by Chemical Formula 1 below

$$[\text{Chemical Formula 1}] \qquad Li_aNi_xMn_yCo_zM_wO_{2+\delta},$$

wherein M includes one or more selected from the group consisting of B, W, Al, Ti, and Mg; and $1<a\leq1.1$, $0<x<0.95$, $0<y<0.8$, $0<z<1.0$, $0\leq w\leq0.1$, $-0.02\leq\delta\leq0.02$, and $x+y+z+w=1$; has a monomodal particle size distribution, has a molar ratio of total transition metals to lithium of 1: 1 to 1.05, has a crystal size of 216.2 nm or more as measured by XRD; includes nickel (Ni) in an amount of 65 mol% or more based on 100 mol% in total of other metals other than lithium (Li), and includes cobalt and manganese in a molar ratio of 1: 0.5 to 2.5.

XVIII) According to XVII), the cathode material may be I) to XI), and may also be the cathode material of the secondary battery of XII).

[Advantageous Effects]

According to the present invention, the present invention has an effect of providing a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging and a secondary battery including the cathode material. In addition, the present invention has an effect of providing a method of easily measuring the particle strength of a cathode material with high crystallinity.

[Description of Drawings]

FIG. 1 includes graphs showing the rolling density of the cathode material prepared in Example 1 as an ideal value and a measured value according to loads.
FIG. 2 includes graphs showing the rolling density of the cathode material prepared in Comparative Example 2 as an ideal value and a measured value according to loads.
FIG. 3 includes graphs showing the rolling density of the cathode material prepared in Comparative Example 3 as an ideal value and a measured value according to loads.
FIG. 4 is a graph showing the particle size distribution before and after rolling of the cathode material manufactured in Example 1.
FIG. 5 is a graph showing the particle size distribution before and after rolling of the cathode material manufactured in Comparative Example 2.
FIG. 6 includes SEM images of the cathode materials described in the paper, Xiangbang Kong, Yige Zhang, Shiyun Peng, Jing Zeng, and Jinbao Zhao, "Superiority of Single-Crystal to Polycrystalline LiNixCoyMn1-x-yO2 Cathode Materials in Storage Behaviors for Lithium-Ion Batteries", ACS Sustainable Chem. Eng. 2020, 8, 14938-14948.

[Best Mode]

The present inventors confirmed that, when designing a cathode material so that, in a predetermined section, an absolute value difference (del_PD_absolute) between an ideal value and measured value of the rolling density of the cathode material, a normalized value difference (del_PD) between an ideal value and measured value of the rolling density of the cathode material, an inclination difference (del_inclination) between an ideal value and measured value of the rolling density of the cathode material, and/or a distance (EMD) between particle size distributions before and after rolling of the cathode material were within predetermined ranges, the cathode material prevented battery performance degradation due to fine particles by not causing particle breakage during an electrode manufacturing process, had excellent lifespan characteristics in a high-voltage environment, had high thermal stability, and generated a small amount of gases during charging and discharging. Based on these results, the present inventors conducted further studies to complete the present invention.

Hereinafter, a cathode material of the present invention, a secondary battery including the same, and a method of measuring the particle strength of a cathode material will be described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

The cathode material of the present invention includes one or more selected from the group consisting of lithium cobalt oxide; lithium manganese oxide; a lithium iron phosphate compound; lithium nickel cobalt aluminum oxide (NCA); lithium nickel oxide (LNO); a nickel manganese-based lithium composite metal oxide obtained by replacing a part of nickel (Ni) with manganese (Mn) in the lithium nickel oxide; a lithium composite transition metal oxide (NCM) obtained by replacing a part of nickel (Ni) with manganese (Mn) and cobalt (Co) in the lithium nickel oxide; and a lithium composite transition metal oxide (NCMA) in which aluminum (Al) is added to the lithium composite transition metal oxide (NCM), has a monomodal particle size distribution, has a crystal size of 216.2 nm or more as measured by XRD, and contains cobalt (Co) and manganese (Mn) in a molar ratio of 1: 0.5 to 2.5. In this case, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

In addition, the cathode material of the present invention includes one or more selected from the group consisting of lithium cobalt oxide; lithium manganese oxide; a lithium iron phosphate compound; lithium nickel cobalt aluminum oxide (NCA); lithium nickel oxide (LNO); a nickel manganese-based lithium composite metal oxide obtained by replacing a part of nickel (Ni) with manganese (Mn) in the lithium nickel oxide; a lithium composite transition metal oxide (NCM) obtained by replacing a part of nickel (Ni) with manganese (Mn) and cobalt (Co) in the lithium nickel oxide; and a lithium composite transition metal oxide (NCMA) in which aluminum (Al) is added to the lithium composite transition metal oxide (NCM), and satisfies at least one of Equations 1 to 4 below:

[Equation 1]

$$1.58 \geq del\_PD\_absolute \geq 1$$

Here, del_PD_absolute is an absolute value difference between an ideal value and measured value of rolling density when a load is 9,000 kgf.

[Equation 2]

$$0.3 \geq del\_PD \geq 0.2$$

Here, del_PD is a normalized value difference between an ideal value and measured value of rolling density when a load is 9,000 kgf.

[Equation 3]

$$0.21 \geq del\_inclination \geq 0.15$$

Here, del_inclination is an inclination difference between an ideal value and measured value of rolling density at a load of 0 to 9,000 kgf.

[Equation 4]

$$(1 - del\_PD)/EMD \geq 10.1$$

Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none). In this case, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

Equation 1 may be preferably Equation 1-1 below

[Equation 1-1]

$$1.4 \geq del\_PD\_absolute \geq 1$$

(Here, del_PD_absolute is an absolute value difference between an ideal value and measured value of rolling density when a load is 9,000 kgf), more preferably Equation 1-2 below

[Equation 1-2]

$$1.35 \geq del\_PD\_absolute \geq 1.1$$

(Here, del_PD_absolute is an absolute value difference between an ideal value and measured value of rolling density when a load is 9,000 kgf). Within this range, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

Equation 2 may preferably satisfies Equation 2-1 below

[Equation 2-1]

$$0.29 \geq del\_PD \geq 0.2$$

(Here, del_PD is a normalized value difference between an ideal value and measured value of rolling density when a load is 9,000 kgf), more preferably Equation 2-2 below

[Equation 2-2]

$$0.29 \geq del\_PD \geq 0.21$$

(Here, del_PD is a normalized value difference between an ideal value and measured value of rolling density when a load is 9,000 kgf), still more preferably Equation 2-3 below

[Equation 2-3]

$$0.28 \geq del\_PD \geq 0.22$$

(Here, del_PD is a normalized value difference between an ideal value and measured value of rolling density when a load is 9,000 kgf), still more preferably Equation 2-4

[Equation 2-4]

$$0.28 \geq del\_PD \geq 0.23$$

(Here, del_PD is a normalized value difference between an ideal value and measured value of rolling density when a load is 9,000 kgf). Within this range, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

Equation 3 may be preferably Equation 3-1 below

[Equation 3-1]

$$0.20 \geq del\_inclination \geq 0.15$$

(Here, del_inclination is an inclination difference between an ideal value and measured value of rolling density at a load of 0 to 9,000 kgf), more preferably Equation 3-2

[Equation 3-2]

$$0.19 \geq del\_inclination \geq 0.15$$

(Here, del_inclination is an inclination difference between an ideal value and measured value of rolling density at a load of 0 to 9,000 kgf). Within this range, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

Equation 4 may be preferably Equation 4-1 below

[Equation 4-1]

$$(1 - del\_PD)/EMD \geq 11$$

(Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none)), more preferably Equation 4-2 below

[Equation 4-2]

$$(1 - del\_PD)/EMD \geq 15$$

(Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none)), still more preferably Equation 4-3 below

[Equation 4-3]

$$(1 - del\_PD)/EMD \geq 20$$

(Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none)), still more preferably Equation 4-4 below

[Equation 4-4]

$$(1 - del\_PD)/EMD \geq 25$$

(Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none)), still more preferably Equation 4-5 below

[Equation 4-5]

$$(1 - del\_PD)/EMD \geq 30$$

(Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none)), still more preferably Equation 4-6 below

[Equation 4-6]

$$(1 - del\_PD)/EMD \geq 35$$

(Here, del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none)). Within this range, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

The cathode material may preferably have a monomodal particle size distribution, more preferably a monomodal particle size distribution with peaks falling between particle sizes of 1 and 8 $\mu$m, still more preferably a monomodal particle size distribution with peaks falling between particle sizes of 2 and 7 $\mu$m. Within this range, a cathode material that prevents the deterioration of battery performance due to fine particles by preventing particle breakage during an electrode manufacturing process, has excellent lifespan characteristics and thermal stability in a high-voltage environment, and generates a small amount of gas during charging and discharging may be provided.

Preferably, even after rolling under a load of 9 tons, the cathode material may have a monomodal particle size distribution. More preferably, the cathode material may have a monomodal particle size distribution with a peak-to-peak particle size difference of 2 $\mu$m or less before and after rolling, still more preferably a monomodal particle size distribution with a peak-to-peak particle size difference of 1.5 $\mu$m or less before and after rolling, still more preferably a monomodal particle size distribution with a peak-to-peak particle size difference of 1 $\mu$m or less before and after rolling. Within this range, a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging may be provided. Here, rolling may be performed using a hydraulic press machine.

In the present disclosure, the particle size distribution is a particle size distribution (PSD) graph, and may be measured using a laser diffraction particle size measuring device. For example, cathode active material powder is dispersed in a dispersion medium, the dispersed cathode active material powder is placed in a commercially available laser diffraction particle size measuring device (e.g., Microtrac MT 3000), and the mixture of the cathode active material powder and the dispersion medium is dispersed with ultrasonic waves about 40 kHz with an output of 40 W using an ultrasonic disperser. Then, the particle size distribution is measured by radiating a laser with an output of about 3 to 4 mW.

The cathode material may have a molar ratio of total transition metals to lithium of preferably 1: 1 to 1.05, more preferably 1: 1.01 to 1.05, still more preferably 1: 1.02 to 1.05, still more preferably 1: 1.03 to 1.05. Within this range, lifespan characteristics may be excellent.

The cathode material may have a crystal size of preferably 216.2 nm or more, more preferably 217 nm or more, still more preferably 260 nm or less, still more preferably 257 nm or less as measured by XRD. Within this range, the lifespan characteristics of a battery may be improved in a high-voltage environment.

In the present disclosure, crystal size may be measured by XRD crystal analysis. In this case, there is no deviation depending on measuring devices or methods. Specifically, about 5 to 10 g of a cathode material is placed in a holder, the particles are irradiated with X-rays, and the resulting diffraction grating is analyzed to obtain the crystal size.

Based on 100 mol% in total of other metals other than lithium (Li), the cathode material may include nickel (Ni) in an amount of preferably 65 mol% or more, more preferably 70 mol% or more, still more preferably 75 mol% or more, still more preferably 80 mol% or more, still more preferably 85 mol% or more, as a specific example, 95 mol% or less, as a preferred example, 90 mol% or less. Within this range, lifespan characteristics may be excellent.

The cathode material may contain cobalt (Co) and manganese (Mn) in a molar ratio of preferably 1: 0.5 to 2.5, more preferably 1: 0.7 to 2.3, still more preferably 1: 0.7 to 2.0, still more preferably 1: 1.6 to 2.0, still more preferably 1: 1.6 to 1.9. Within this range, lifespan characteristics may be excellent.

In the present disclosure, the contents of metal components such as nickel (Ni), cobalt (Co), and manganese (Mn) may be measured without particular limitations using a measurement method such as ion chromatography (IC) commonly used in the technical field to which the present invention belongs. As a specific example, an inductively coupled plasma (IC-ICP) analyzer, an IC-ICP-MS analyzer, or an IC-ICP-AEC analyzer may be used.

The cathode material may preferably be a compound represented by Chemical Formula 1 below.

[Chemical Formula 1] $\quad Li_aNi_xMn_yCo_zM_wO_{2+\delta}$

In Chemical Formula 1, M includes one or more selected from the group consisting of B, W, Al, Ti, and Mg; and $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x+y+z+w=1$. Within this range, a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging may be provided.

The cathode material may have preferably an EDM (Earth Mover's Distance) value of 0.071 or less, preferably 0.069 or less, more preferably 0.65 or less as obtained using an SciPy's Wasserstein_distance function (u_values=particle distribution before rolling, v_values=particle distribution after rolling, u_weights=none, v_weights=none). Within this range, a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging may be provided. Here, "u_values" and "v_values" are vol% for particle size, and the vol% values before and after rolling for the same particle size ($\mu$m) may be entered into u_values and v_values, respectively. In addition, "u_weights" and "v_weights" are weights, and "none" means no value is entered, so the weights are equal.

The pre-rolling particle distribution and post-rolling particle distribution preferably each input the entire particle size distribution graph values (vector values), and as a specific example, 100 to 150 values may be input, and in the example of the present invention, 131 values were input.

For example, the rolling may be performed under a load of 9,000 kgf.

In the present disclosure, EMD (Earth Mover's Distance) is one of measures for evaluating the similarity between two distributions and is also referred to as the 1st Wasserstein metric. EMD is a distance measure that represents the minimum amount of work required to move a u-distribution to a v-distribution, and the work may be calculated by the sum of the product of the weight to be moved and the moving distance for each section of the histogram (discrete distribution). The weight to be moved per section corresponds to vol% of particle size in the present invention.

The cathode material may be preferably a single particle. More preferably, the cathode material does not include secondary particles. In this case, a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging may be provided.

For example, the single particle may be a particle composed of 30 or fewer nodules, preferably a particle composed of 1 to 20 nodules, more preferably a particle composed of 1 to 10 nodules, still more preferably a particle composed of 1 to 5 nodules, most preferably a particle composed of 1 nodule. In this case, a cathode material that prevents battery performance degradation due to fine particles by not causing particle breakage during an electrode manufacturing process, has excellent lifespan characteristics in a high-voltage environment, has high thermal stability, and generates a small amount of gases during charging and discharging may be provided.

In the present disclosure, a nodule refers to a particle unit body that constitutes a single particle, and may be a single crystal lacking a crystalline grain boundary, or a polycrystal in which no grain boundary exists in appearance when observed under a field of view of 5,000 to 20,000 times using a scanning electron microscope (SEM) or electron backscatter diffraction (EBSD).

In the present disclosure, the number of nodules refers to the average number of nodules of cathode material particles. A cathode containing a cathode active material is cut using the ion milling method, and a cross-sectional image in the thickness direction of the cut cathode is obtained using a scanning electron microscope (SEM). Then, within the cross-sectional image, at least 30 particles are selected for each of large-diameter cathode active material particles and small-diameter cathode active material particles. Then, the number of nodules in the cross-section of each cathode active material particle is measured through SEM image analysis, and the arithmetic mean is calculated.

In the present disclosure, a secondary particle is an aggregate formed by the agglomeration of multiple single particles and refers to a particle containing more than 30 nodules.

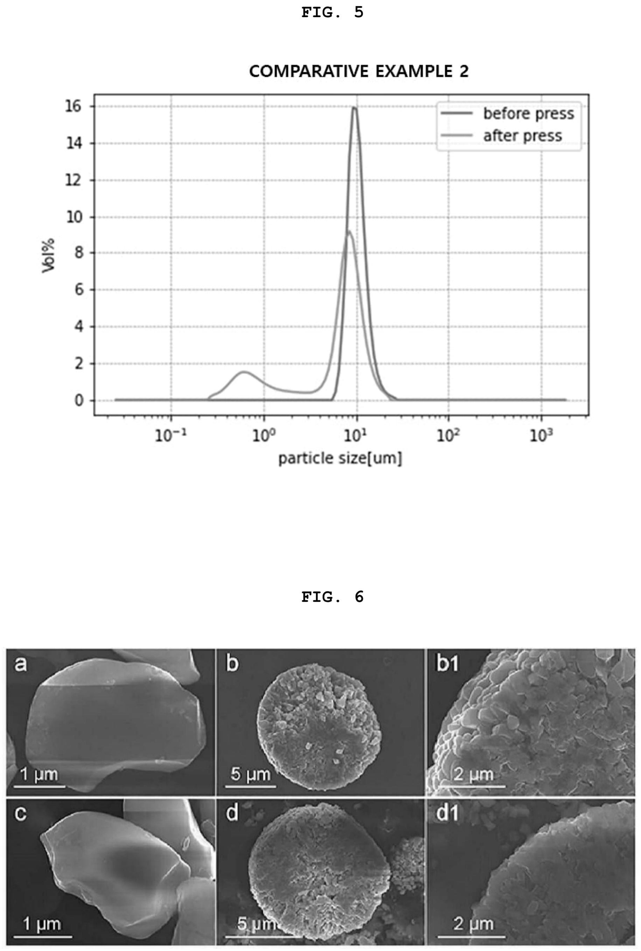

FIG. 6 includes SEM images for the cathode materials published in the paper, Xiangbang Kong, Yige Zhang, Shiyun Peng, Jing Zeng, and Jinbao Zhao, "Superiority of Single-Crystal to Polycrystalline LiNixCoyMn1-x-yO2 Cathode Materials in Storage Behaviors for Lithium-Ion Batteries", ACS Sustainable Chem. Eng. 2020, 8, 14938-14948.

Referring to FIG. 6, image a shows a single particle of NCM622 cathode active material as a smooth particle without nodules on the surface, and images b and b1 show secondary particles of NCM622 cathode active material as particles with multiple nodules formed on the surface. In addition, image c shows a single particle of NCM811 cathode active material as a smooth particle without any nodules on the surface, and images d and d1 show secondary particles of NCM811 cathode active material with multiple nodules formed on the surface. In this way, single particles and secondary particles may be easily distinguished through SEM image analysis.

The method of preparing a cathode material according to the present invention may be one of the cathode material preparation methods commonly used in the technical field to which the present invention belongs, as long as the method satisfies the definition of the cathode material of the present invention, without particular limitation.

The method of preparing a cathode material may preferably include a step of sintering a transition metal hydroxide and lithium hydroxide at 750 to 950 °C, preferably 800 to 900 °C for 5 to 15 hours, preferably 10 to 15 hours under air or oxygen atmosphere.

The transition metal hydroxide may be referred to as a transition metal precursor as a transition metal source of the cathode active material, and the lithium hydroxide may be referred to as a lithium precursor as a lithium source of the cathode active material.

The surface of the cathode material may be preferably coated with a coating agent containing metal or carbon. In this case, the structural stability of the cathode active material may be improved without chemical and physical changes in the cathode active material, thereby improving electrochemical properties such as output performance, lifespan characteristics, and capacity. In addition, the amount of residual lithium is controlled and the pH is reduced by substitution with a heterogeneous element on the surface of the cathode active material, thereby improving the physicochemical properties.

The metal includes preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) or boron (B), as a specific example, tungsten boride (WB). In this case, resistance characteristics and lifespan characteristics may be improved.

For example, the coating agent containing the metal may be an oxide or acid containing the metal as an element within a molecule.

The coating agent containing an organic metal is not particularly limited as long as the coating agent is a coating agent containing an organic metal commonly used in the technical field to which the present invention belongs and containing metal, and may be, as a specific example, a metal alkoxide, etc.

The coating agent containing a carbon component is not particularly limited as long as the coating agent is a coating agent containing a carbon component commonly used in the technical field to which the present invention belongs, and as a specific example, may be a sugar such as sucrose.

For example, based on 1 mol% of metal in the cathode active material before coating treatment, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The surface coating may be performed preferably by coating a surface in a solid or liquid manner with a coating agent containing one or more of a metal, an organic metal, and a carbon component and heat-treating at 100 to 1200 °C, more preferably 200 to 1000 °C, more preferably 250 to 800 °C. In this case, structural stability and electrochemical performance may be improved while maintaining the intrinsic properties of the cathode active material.

The heat treatment time may be preferably 1 to 16 hours, more preferably 3 to 7 hours. Within this range, structural stability and electrochemical performance may be improved while maintaining the intrinsic properties of the cathode active material.

The coating method is not particularly limited as long as the coating method is a coating method commonly used in the technical field to which the present invention belongs. For example, the coating method may include a liquid method of preparing a liquid coating agent and mixing the coating agent with a cathode active material, a mechanochemical method using the high mechanical energy of ball milling, a fluidized bed coating method, a spray drying method, a precipitation method in which a coating agent is precipitated onto the surface of a cathode active material in an aqueous solution state, a method of using the reaction between a gaseous coating agent and a cathode active material, or a sputtering method.

For example, the metal, organic metal, and carbon component may be spherical, plate-shaped, square, or needle-shaped, and these shapes may be controlled by changing process conditions during the manufacturing process, and the definition of each shape is not particularly limited as long as it follows the definition commonly accepted in the technical field to which the present invention belongs.

The coating agent may preferably have an average diameter of 1 to 1000 nm and a specific surface area of 10 to 100 $m^2/g$, more preferably an average diameter of 10 to 100 nm and a specific surface area of 20 to 100 $m^2/g$. Within this range, since the coating agent is uniformly attached to the surface of the cathode active material, the structural stability of the cathode active material may be realized. Thus, the deterioration of the lifespan characteristics and electrochemical performance due to lattice deformation or collapse of the crystal structure of the cathode active material may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter ($D_{50}$) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

In addition, a secondary battery of the present invention includes the cathode material. In this case, since no breakage of the cathode material occurs during an electrode manufacturing process, there is no degradation of battery performance due to fine particles. In addition, lifespan characteristics may be excellent in a high-voltage environment, thermal stability may be high, and the amount of gas generated during charging and discharging may be small.

The secondary battery of the present invention may include all of the contents of the cathode material described above. Therefore, redundant description thereof is omitted.

The method of manufacturing a secondary battery according to the present invention is not particularly limited as long as the method is a method of manufacturing a lithium secondary battery commonly used in the technical field to which the present invention belongs.

In addition, the method of measuring the particle strength of a cathode material according to the present invention includes step A) of measuring the rolling density of a cathode material using a powder resistance meter at a load of 0 kgf to 2,000 kgf or a load of 0 kgf or more and less than 2,000 kgf; step B) of measuring the rolling density of the cathode material using a hydraulic press machine at a load of greater than 2,000 kgf or a load of 2,000 kgf or more; and step C) of using the rolling density of the cathode material measured in steps A) and B) to measure an absolute value difference (del_PD_absolute) between an ideal value and measured value of the rolling density, a normalized value difference (del_PD) between an ideal value and measured value of the rolling density, an inclination difference (del_inclination) value between an ideal value and measured value of the rolling density, or particle distribution before and after rolling and using an SciPy's Wasserstein_distance function (u_values=particle distribution before rolling, v_values=particle distribution after rolling, u_weights=none, v_weights=none) to obtain EMD. In this case, the particle strength of a cathode material with high crystallinity may be easily measured.

The cathode material may be preferably a compound represented by Chemical Formula 1 below.

[Chemical Formula 1]　　　　　$Li_aNi_xMn_yCo_zM_wO_{2+\delta}$

In Chemical Formula 1, M includes one or more selected from the group consisting of B, W, Al, Ti, and Mg; and $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x+y+z+w=1$.

The particle may be preferably a single particle.

Step A) may preferably include a step of measuring the rolling density using a powder resistance meter at a load of 0 kgf to 2,000 kgf or a load of 0 kgf or more and less than 2,000 kgf and extending two or more measured rolling densities to obtain the rolling density value at a load point of 9,000 kgf as the ideal value ($PD_i$) of the rolling density under a load of 9,000 kgf.

Specifically, the rolling density according to loads ideally has a linear causal relationship. By extending two or more rolling densities measured between a load of 2,000 kgf or less and a load of less than 2,000 kgf, rolling density may be obtained at a load of greater than or 2,000 kgf or 2,000 kgf or more, preferably at a load of 9,000 kgf, and this is called the ideal value ($PD_i$) of rolling density.

Step B) may be preferably a step of measuring the rolling density of a cathode material between a load of greater than 2,000 kgf or 2,000 kgf or more and a load of 9,000 kgf using a hydraulic press machine. In this case, the particle strength of a cathode material with high crystallinity may be easily measured.

Specifically, the rolling density of the cathode material does not actually have a linear causal relationship and increases linearly between a load of 2,000 kgf or less and a load of less than 2,000 kgf, and then shows a logarithmic pattern as it becomes more and more stable at a load of greater than 2,000 kgf and 9,000 kgf or less or a load of 2,000 kgf to 9,000 kgf. This is called the measured value of rolling density ($PD_r$).

The normalized value difference (del_PD) between an ideal value and measured value of the rolling density and particle distribution before and after rolling are measured. The EMD calculated from the SciPy's Wasserstein_distance function is generally proportional or corresponding to the particle strength of the cathode material within the range of particle strength (absolute value) required for the cathode material, so the particle strength of the cathode material may be indirectly confirmed (normalized value).

The absolute value difference (del_PD_absolute) between an ideal value and measured value of the rolling density, a normalized value difference (del_PD) between an ideal value and measured value of the rolling density, and an inclination difference (del_inclination) between an ideal value and measured value of the rolling density are generally proportional or corresponding to the particle strength of the cathode material within the range of particle strength (absolute value) required for the cathode material, so the particle strength of the cathode material may be indirectly confirmed (normalized value).

For example, the particle strength (absolute value) required for the cathode material may range from 10 to 1000 MPa, preferably 50 to 500 MPa, more preferably 100 to 400 MPa, still more preferably 100 to 350 MPa. Within this range, accuracy may be excellent. Here, the particle strength (absolute value) is a value converted to a pressure unit (MPa) by measuring the point at which cracks occur in the cathode material particles while gradually increasing the pressure.

For example, in step C), EMD may be obtained by measuring the particle distribution before and after rolling and using SciPy's Wasserstein_distance function from the distance between the particle distributions using the particle distribution.

The method of measuring the particle strength of a cathode material according to the present invention may include all of the contents of the cathode material described above and the secondary battery including the same. Therefore, duplicate description thereof is omitted.

In addition, in the method of measuring the particle strength of a cathode material according to the present invention, to facilitate understanding by ordinary technicians, only the absolutely necessary conditions and devices are described, and other self-evident auxiliary conditions and devices are omitted.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

$Ni_xMn_yCo_z(OH)_2$ and LiOH were mixed so that a molar ratio of transition metal (Ni+Mn+Co): Li was 1:1.05, a molar ratio of transition metal (Ni+Mn+Co): Ni was 0.700, and a molar ratio of Mn/Co was 1.9, and then fired at 850 °C for 12 hours to obtain $LiNi_{0.700}Mn_yCo_zO_2$, as a cathode active material, having a particle size of 227.6 nm. Then, it was confirmed using a scanning electron microscope (SEM) that the obtained cathode active material was a single particle.

Examples 2 to 18

To prepare cathode active materials having the particle sizes shown in Table 1 below, the same procedure as in Example 1 was performed except that, in $Ni_xMn_yCo_z(OH)_2$ and LiOH in Example 1, a molar ratio of transition metal (Ni+Mn+Co) : Li, a molar ratio of transition metal (Ni+Mn+Co): Ni, and a molar ratio of Mn/Co were changed as described in Table 1 below. In addition, the particle types of the prepared cathode active materials were confirmed using a scanning electron microscope (SEM), and the results are shown in Table 1.

Comparative Example 1

$Ni_xMn_yCo_z(OH)_2$ and LiOH were mixed so that a molar ratio of transition metal (Ni+Co+Mn): Li was 1:1.06, a molar ratio of transition metal (Ni+Mn+Co): Ni was 0.87, and a molar ratio of Mn/Co was 1.4, and then fired at 850 °C for 12 hours to obtain $LiNi_{0.87}Mn_yCo_zO_2$, as a cathode active material, having a particle size of 109.5 nm. Then, it was confirmed using a scanning electron microscope (SEM) that the prepared cathode active material was a secondary particle.

Comparative Examples 2 to 18

To prepare the cathode active materials having the particle sizes shown in Table 2 below, the same procedure as in Comparative Example 1 was performed except that, in $Ni_xMn_yCo_z(OH)_2$ and LiOH of Comparative Example 1, a molar ratio of transition metal (Ni+Mn+Co): Li, a molar ratio of transition metal (Ni+Mn+Co): Ni, and a molar ratio of Mn/Co were changed according to Table 2 below. In addition, the particle types of the prepared cathode active materials were confirmed using a scanning electron microscope (SEM), and the results are shown in Table 2.

[Test Example I]

The characteristics of the cathode active materials prepared in Examples 1 to 18 and Comparative Examples 1 to 18 were measured by the following methods, and the results are shown in Tables 1 and 2 below.

**[0102]** * ICP analysis: Using an ICP analysis apparatus, in the cathode active material, the ratio of lithium (Li) and a transition metal (Me), the ratio of nickel and a transition metal, the ratio of Mn/Co, and the content (mg/kg) of a specific atom were measured. In this case, a general ICP analyzer frequently used in laboratories may be used. However, there was no deviation according to the measuring device or method.

**[0103]** * Particle size (crystal size): Measured by XRD crystal analysis. Specifically, approximately 5 g to 10 g of cathode active material particles was placed in a holder, X-rays were irradiated on the particles, and the resulting diffraction grating was analyzed. At this time, a general X-ray diffraction analyzer may be used, and there is no deviation according to the measuring device or method.

[Table 1]

| Classificati on | Partic le shape | Li molar ratio (Ni+Mn+Co=1m ol) | Ni molar ratio (Ni+Mn+Co=1m ol) | Mn/C o mola r rati o | Partic le size (nm) |
|---|---|---|---|---|---|
| Example 1 | Single partic le | 1.05 | 0.70 | 1.9 | 227.6 |
| Example 2 | Single partic le | 1.03 | 0.85 | 0.7 | 217.9 |
| Example 3 | Single partic le | 1.05 | 0.86 | 1.6 | 256.9 |
| Example 4 | Single partic le | 1.05 | 0.7 | 1 | 227.6 |
| Example 5 | Single partic le | 1.03 | 0.85 | 1 | 217.9 |
| Example 6 | Single partic le | 1.05 | 0.86 | 1 | 256.9 |
| Example 7 | Single partic le | 1.05 | 0.7 | 1.3 | 227.6 |
| Example 8 | Single partic le | 1.03 | 0.85 | 1.3 | 217.9 |
| Example 9 | Single partic le | 1.05 | 0.86 | 1.3 | 256.9 |
| Example 10 | Single partic le | 1.05 | 0.7 | 1.7 | 227.6 |
| Example 11 | Single partic le | 1.03 | 0.85 | 1.7 | 217.9 |
| Example 12 | Single partic le | 1.05 | 0.86 | 1.7 | 256.9 |
| Example 13 | Single partic le | 1.05 | 0.7 | 2 | 227.6 |
| Example 14 | Single partic le | 1.03 | 0.85 | 2 | 217.9 |
| Example 15 | Single partic le | 1.05 | 0.86 | 2 | 256.9 |
| Example 16 | Single partic le | 1.05 | 0.7 | 2.3 | 227.6 |
| Example 17 | Single partic le | 1.03 | 0.85 | 2.3 | 217.9 |
| Example 18 | Single partic le | 1.05 | 0.86 | 2.3 | 256.9 |

[Table 2]

| Classification | Particle shape | Li molar ratio (Ni+Mn+Co=1mol) | Ni molar ratio (Ni+Mn+Co=1mol) | Mn/Co molar ratio | Particle size (nm) |
|---|---|---|---|---|---|
| Comparative Example 1 | Secondary particle | 1.06 | 0.87 | 1.4 | 109.5 |
| Comparative Example 2 | Secondary particle | 1.05 | 0.88 | 1.4 | 108.8 |
| Comparative Example 3 | Single particle | 1.06 | 0.87 | 1.5 | 214.3 |
| Comparative Example 4 | Secondary particle | 1.06 | 0.87 | 1 | 109.5 |
| Comparative Example 5 | Secondary particle | 1.06 | 0.87 | 1.3 | 109.5 |
| Comparative Example 6 | Secondary particle | 1.06 | 0.87 | 1.7 | 109.5 |
| Comparative Example 7 | Secondary particle | 1.06 | 0.87 | 2 | 109.5 |
| Comparative Example 8 | Secondary particle | 1.06 | 0.87 | 2.3 | 109.5 |
| Comparative Example 9 | Secondary particle | 1.05 | 0.88 | 1 | 108.8 |
| Comparative Example 10 | Secondary particle | 1.05 | 0.88 | 1.3 | 108.8 |
| Comparative Example 11 | Secondary particle | 1.05 | 0.88 | 1.7 | 108.8 |
| Comparative Example 12 | Secondary particle | 1.05 | 0.88 | 2 | 108.8 |
| Comparative Example 13 | Secondary particle | 1.05 | 0.88 | 2.3 | 108.8 |
| Comparative Example 14 | Single particle | 1.06 | 0.87 | 1 | 214.3 |
| Comparative Example 15 | Single particle | 1.06 | 0.87 | 1.3 | 214.3 |
| Comparative Example 16 | Single particle | 1.06 | 0.87 | 1.7 | 214.3 |
| Comparative Example 17 | Single particle | 1.06 | 0.87 | 2 | 214.3 |
| Comparative Example 18 | Single particle | 1.06 | 0.87 | 2.3 | 214.3 |

As shown in Tables 1 and 2, compared to the cathode active materials of Comparative Examples 1 to 18, in the case of the cathode active materials (Examples 1 to 18) according to the present invention, a monomodal particle size distribution was exhibited, a molar ratio of total transition metals to lithium was 1: 1 to 1.05, the crystal size was 216.2 nm or more when measured by XRD, nickel (Ni) was included in an amount of 65 mol% or more based on 100 mol% in total of other metals other than Li, and the molar ratio of cobalt and manganese was 1: 0.5 to 2.5.

[Test Example II]

The characteristics of the cathode active materials prepared in Examples 1 to 18 and Comparative Examples 1 to 18 were measured by the following methods, and the results are shown in Tables 3 and 4 below.

[0106] * del_PD_absolute, del_PD and del_inclination: 5 g of the prepared cathode active material powder was placed in a $\phi$1cm mold of a powder resistance measuring device, and the rolling density was measured under loads of 400 kgf, 800 kgf, 1200 kgf, 1600 kgf, and 2000 kgf. Then, 3 g of separately prepared cathode active material powder was placed in a $\phi$12.9 mm mold of a hydraulic press, and the rolling density was measured under a load of 9000 kgf.

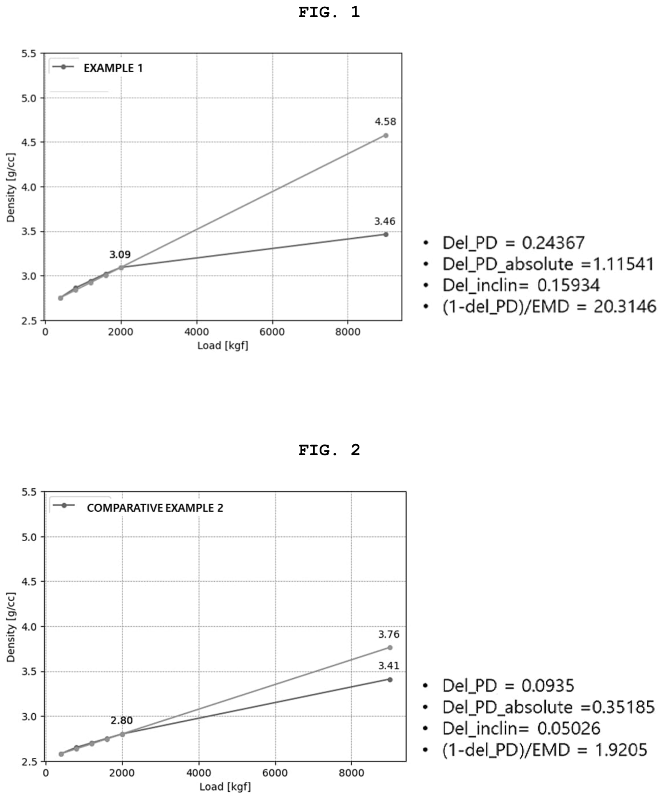

As shown in FIGS. 1 to 3 below, the rolling density values (measured values; blue dots or dark dots) under loads of 400 kgf, 800 kgf, 1200 kgf, 1600 kgf, 2000 kgf, and 9000 kgf were plotted in the diagram, and these were connected by a straight line to obtain the measured value graph (blue line or dark line). Next, a straight line (linear function, brown line, or light line) was drawn passing through the rolling density measured values under loads of 400 kgf and 2000 kgf, and the rolling density value at the load point of 9000 kgf on the straight line was obtained as the ideal value (brown point, or light point) of rolling density under load of 9000 kgf.

The values described in the completed graph were substituted into Equations 5 to 9 below to obtain the del_PD_absolute, del_PD and del_inclination values.

[Equation 5]

$$del\_PD\_absolute = PD_i - PD_r$$

Here, $PD_i$ is an ideal value of a rolling density under a load of x kgf, $PD_r$ is a measured value of a rolling density under a load of x kgf, and x is 9000.

[Equation 6]

$$del\_PD = (PD_i - PD_r)/PD_i$$

Here, $PD_i$ is an ideal value of a rolling density under a load of x kgf, $PD_r$ is a measured value of a rolling density under a load of x kgf, and x is 9000.

[Equation 7]

$$del\_inclination = inclination(i) - inclination(r)$$

Here, inclination (i) is the inclination of an ideal value, and inclination (r) is the inclination of a measured value.

[Equation 8]

$$Inclination(i) = (PD_i(x) - PD_i(y)/(x-y)$$

Here, $PD_i(x)$ is an ideal value of a rolling density under a load of x kgf, $PD_i(y)$ is an ideal value of a rolling density under a load of y kgf, x>y is satisfied, x is 9000, and y is 400 or 2000.

[Equation 9]

$$Inclination(r) = (PD_r(x) - PD_r(y)/(x-y)$$

Here, $PD_r(x)$ is a measured value of a rolling density under a load of x kgf, $PD_r(y)$ is a measured value of a rolling density under a load of y kgf, x>y is satisfied, x is 9000, and yis 2000.

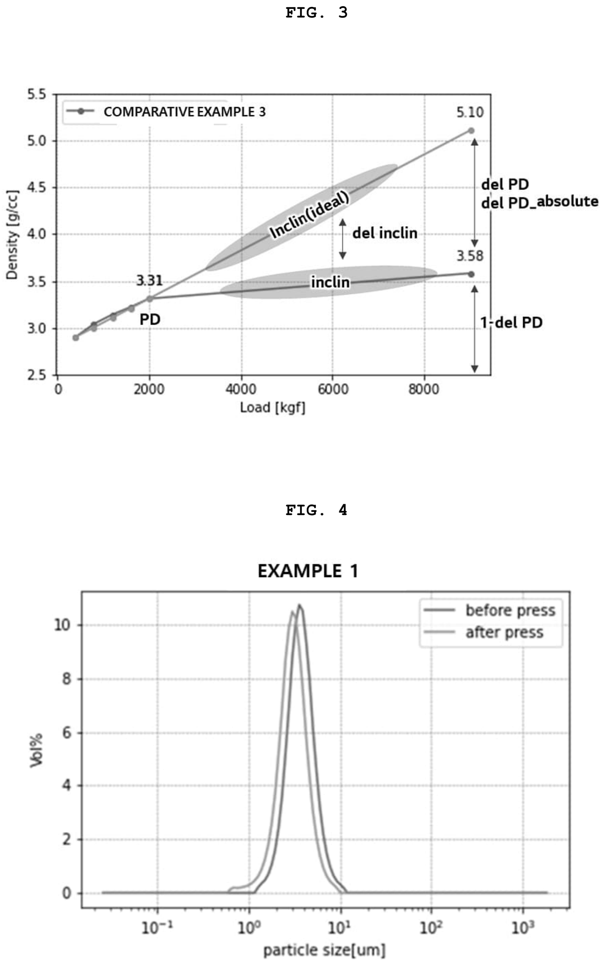

[0114] * EMD: The prepared cathode active material powder was measured using a particle size analyzer before and after rolling under a load of 9000 kgf, and particle size distribution (PSD) graphs for each were obtained as shown in FIGS. 4 and 5 below. Then, the values shown in the graph were substituted into SciPy's Wasserstein_distance function (u_values=particle distribution before rolling, v_values=particle distribution after rolling, u_weights=none, v_weights=none).

[Table 3]

| Classification | del_ PD_absolute | del_PD | EMD | del_inclin. | (1 - del_PD)/EMD |
|---|---|---|---|---|---|
| Example 1 | 1.115 | 0.244 | 0.037 | 0.159 | 20.315 |
| Example 2 | 1.321 | 0.276 | 0.064 | 0.189 | 11.368 |
| Example 3 | 1.349 | 0.278 | 0.019 | 0.193 | 38.489 |
| Example 4 | 1.115 | 0.244 | 0.037 | 0.159 | 20.315 |
| Example 5 | 1.321 | 0.276 | 0.064 | 0.189 | 11.368 |
| Example 6 | 1.349 | 0.278 | 0.019 | 0.193 | 38.489 |
| Example 7 | 1.115 | 0.244 | 0.037 | 0.159 | 20.315 |
| Example 8 | 1.321 | 0.276 | 0.064 | 0.189 | 11.368 |

(continued)

| Classification | del_ PD_absolute | del_PD | EMD | del_inclin. | (1 - del_PD)/EMD |
|---|---|---|---|---|---|
| Example 9 | 1.349 | 0.278 | 0.019 | 0.193 | 38.489 |
| Example 10 | 1.115 | 0.244 | 0.037 | 0.159 | 20.315 |
| Example 11 | 1.321 | 0.276 | 0.064 | 0.189 | 11.368 |
| Example 12 | 1.349 | 0.278 | 0.019 | 0.193 | 38.489 |
| Example 13 | 1.115 | 0.244 | 0.037 | 0.159 | 20.315 |
| Example 14 | 1.321 | 0.276 | 0.064 | 0.189 | 11.368 |
| Example 15 | 1.349 | 0.278 | 0.019 | 0.193 | 38.489 |
| Example 16 | 1.115 | 0.244 | 0.037 | 0.159 | 20.315 |
| Example 17 | 1.321 | 0.276 | 0.064 | 0.189 | 11.368 |
| Example 18 | 1.349 | 0.278 | 0.019 | 0.193 | 38.489 |

[Table 4]

| Classification | del_ PD absolute | del_PD | EMD | del_inclin. | - (1 del_PD)/EMD |
|---|---|---|---|---|---|
| Comparative Example 1 | 0.343 | 0.092 | 0.543 | 0.049 | 1.673 |
| Comparative Example 2 | 0.352 | 0.094 | 0.472 | 0.050 | 1.921 |
| Comparative Example 3 | 1.596 | 0.312 | 0.078 | 0.228 | 8.782 |
| Comparative Example 4 | 0.343 | 0.092 | 0.543 | 0.049 | 1.673 |
| Comparative Example 5 | 0.343 | 0.092 | 0.543 | 0.049 | 1.673 |
| Comparative Example 6 | 0.343 | 0.092 | 0.543 | 0.049 | 1.673 |
| Comparative Example 7 | 0.343 | 0.092 | 0.543 | 0.049 | 1.673 |
| Comparative Example 8 | 0.343 | 0.092 | 0.543 | 0.049 | 1.673 |
| Comparative Example 9 | 0.352 | 0.094 | 0.472 | 0.050 | 1.921 |
| Comparative Example 10 | 0.352 | 0.094 | 0.472 | 0.050 | 1.921 |
| Comparative Example 11 | 0.352 | 0.094 | 0.472 | 0.050 | 1.921 |
| Comparative Example 12 | 0.352 | 0.094 | 0.472 | 0.050 | 1.921 |
| Comparative Example 13 | 0.352 | 0.094 | 0.472 | 0.050 | 1.921 |
| Comparative Example 14 | 1.596 | 0.312 | 0.078 | 0.228 | 8.782 |
| Comparative Example 15 | 1.596 | 0.312 | 0.078 | 0.228 | 8.782 |
| Comparative Example 16 | 1.596 | 0.312 | 0.078 | 0.228 | 8.782 |
| Comparative Example 17 | 1.596 | 0.312 | 0.078 | 0.228 | 8.782 |
| Comparative Example 18 | 1.596 | 0.312 | 0.078 | 0.228 | 8.782 |

As shown in Tables 3 and 4, compared to the cathode active materials of Comparative Examples 1 to 18, the cathode active materials (Examples 1 to 18) according to the present invention satisfy both Equations 1 to 4 and the EDM range according to the present invention.

In particular, although the cathode active materials of Comparative Examples 3 and 14 to 18 are a single particle, Equations 1 to 4 according to the present invention are not satisfied. Even for single particles, it was confirmed that the lifespan characteristics deteriorate when Equations 1 to 4 according to the present invention are not satisfied.

In addition, FIGS. 1 to 3 below are graphs showing the rolling density of the cathode active materials prepared in Example 1 and Comparative Examples 1 and 2, respectively, as ideal values and measured values depending on loads. The measured value is indicated by a brown dot and line, or a light dot and line, and the ideal value is indicated by a blue dot and line, or a dark dot and line. From these values, it was confirmed that the cathode active material of Example 1 satisfies Equations 1 to 4 according to the present invention, whereas the cathode active materials of Comparative Examples 1 and 2 do not satisfy any of Equations 1 to 4 according to the present invention.

In addition, as shown in FIGS. 4 and 5 below, FIGS. 4 and 5 are graphs showing the particle size distributions of the cathode active materials prepared in Example 1 and Comparative Example 2 before and after rolling, respectively. In the cathode active material of Example 1, the particle size distribution shape before and after rolling did not change and the peak shifted little, but in the cathode active material of Comparative Example 2, the particle size distribution before and after rolling changed from monomodal to bimodal and the peak shifted significantly.

[Test Example III: Coin half cell (CHC) evaluation]

The electrochemical performances of the cathode active materials prepared in Examples 1 to 18 and Comparative Examples 1 to 18 were measured through the CHC cell evaluation as follows, and the results are shown in Tables 5 and 6 below.

**[0120]** * Coin half cell (CHC) manufacturing: 96.5 % by weight of a cathode active material, 1.5 % by weight of carbon black, and 2 % by weight of PVdF were prepared and mixed in an NMP to obtain slurry. The slurry was applied to aluminum foil with a thickness of 20 $\mu$m, followed by drying at 130 °C for 1 hour. Then, the aluminum foil was punched to manufacture a cathode, and a coin half-cell (CHC) was manufactured.

**[0121]** * High-temperature (45 °C) lifespan capacity retention rate: After performing formation of each manufactured coin half-cell at a rate of 0.1 C, 50 cycles of charging and discharging were performed at 0.33C/0.33C at a voltage of 2.5 to 4.25 V at a high temperature (45 °C). At this time, the discharge capacity when performed once and the discharge capacity after 50 times were measured using a measuring device (PNE-0506 charger/discharger, manufacturer: PNE Solution Co., Ltd., 5 V, 6 A), and the discharge capacity when performed once was set as the initial capacity.

Then, by comparing the 50th discharge capacity and the initial discharge capacity, the high-temperature capacity retention rate was calculated as the high-temperature lifespan characteristics by Equation 10 below, and the results are shown in Tables 5 and 6 below.

High-temperature capacity retention rate (%) = (Discharge capacity after high-temperature cycle/Initial discharge capacity) * 100 [Equation 10]

[Table 5]

| Classification | High-temperature lifespan capacity retention rate (%) |
|---|---|
| Example 1 | 95.214 |
| Example 2 | 94.999 |
| Example 3 | 96.078 |
| Example 4 | 94.767 |
| Example 5 | 95.579 |
| Example 6 | 95.663 |
| Example 7 | 95.145 |
| Example 8 | 95.941 |
| Example 9 | 95.974 |
| Example 10 | 95.282 |
| Example 11 | 96.131 |
| Example 12 | 96.072 |
| Example 13 | 95.150 |
| Example 14 | 96.093 |
| Example 15 | 95.948 |
| Example 16 | 94.850 |
| Example 17 | 95.934 |
| Example 18 | 95.688 |

[Table 6]

| Classification | High-temperature lifespan capacity retention rate (%) |
|---|---|
| Comparative Example 1 | 92.296 |
| Comparative Example 2 | 92.649 |
| Comparative Example 3 | 93.869 |
| Comparative Example 4 | 92.447 |
| Comparative Example 5 | 92.307 |
| Comparative Example 6 | 92.386 |
| Comparative Example 7 | 92.686 |
| Comparative Example 8 | 93.224 |
| Comparative Example 9 | 92.834 |
| Comparative Example 10 | 92.672 |
| Comparative Example 11 | 92.687 |
| Comparative Example 12 | 92.910 |
| Comparative Example 13 | 93.350 |
| Comparative Example 14 | 93.682 |
| Comparative Example 15 | 93.874 |
| Comparative Example 16 | 93.792 |
| Comparative Example 17 | 93.517 |
| Comparative Example 18 | 93.093 |

As shown in Table 5 and 6, in the case of the secondary batteries including the cathode materials (Examples 1 to 18) according to the present invention, the high-temperature capacity retention for CHC is 94.8 % or more, more precisely, in the range of 94.8 to 97 %, showing excellent high-temperature lifespan characteristics. On the other hand, the CHC including the cathode materials of Comparative Examples 1 to 18 showed a high-temperature lifespan capacity retention rate of 93.9 % or less, showing poor high-temperature lifespan characteristics.

**Claims**

1. A cathode material, comprising one or more selected from the group consisting of lithium cobalt oxide; lithium manganese oxide; a lithium iron phosphate compound; lithium nickel cobalt aluminum oxide (NCA); lithium nickel oxide (LNO); a nickel manganese-based lithium composite metal oxide obtained by replacing a part of nickel (Ni) with manganese (Mn) in the lithium nickel oxide; a lithium composite transition metal oxide (NCM) obtained by replacing a part of nickel (Ni) with manganese (Mn) and cobalt (Co) in the lithium nickel oxide; and a lithium composite transition metal oxide (NCMA) in which aluminum (Al) is added to the lithium composite transition metal oxide (NCM),

wherein the cathode material satisfies at least one of Equations 1 to 4 below:

[Equation 1]

$$1.58 \geq del\_PD\_absolute \geq 1,$$

wherein del_PD_absolute is an absolute value difference between an ideal value and measured value of rolling density when a load is 9,000 kgf.

[Equation 2]

$$0.3 \geq del\_PD \geq 0.2,$$

wherein del_PD is a normalized value difference between an ideal value and measured value of rolling density when a load is 9,000 kgf.

[Equation 3]

$$0.21 \geq del\_inclination \geq 0.15,$$

wherein del_inclination is an inclination difference between an ideal value and measured value of rolling density at a load of 0 to 9,000 kgf.

[Equation 4]

$$(1 - del\_PD)/EMD \geq 10.1,$$

wherein del_PD is a normalized value difference between an ideal value and measured value of rolling density when a load is 9,000 kgf, and EMD (Earth Mover's Distance) is a value obtained using SciPy's Wasserstein_distance function (u_values=particle distribution before rolling, v_values=particle distribution after rolling, u_weights=none, v_weights=none).

2. The cathode material according to claim 1, wherein the cathode material has a monomodal particle size distribution.

3. The cathode material according to claim 1, wherein, in the cathode material, a molar ratio of total transition metals to lithium is 1: 1 to 1.05.

4. The cathode material according to claim 1, wherein the cathode material has a crystal size of 216.2 nm or more as measured by XRD.

5. The cathode material according to claim 1, wherein, based on 100 mol% in total of other metals other than lithium (Li), the cathode material comprises nickel (Ni) in an amount of 65 mol% or more.

6. The cathode material according to claim 1, wherein the cathode material contains cobalt (Co) and manganese (Mn), and a molar ratio of cobalt to manganese is 1: 0.5 to 2.5.

7. The cathode material according to claim 1, wherein the cathode material is a compound represented by Chemical Formula 1 below:

[Chemical Formula 1]      $Li_aNi_xMn_yCo_zM_wO_{2+\delta}$,

wherein M comprises one or more selected from the group consisting of B, W, Al, Ti, and Mg; and $1<a\leq1.1$, $0<x<0.95$, $0<y<0.8$, $0<z<1.0$, $0\leq w\leq0.1$, $-0.02\leq\delta\leq0.02$, and $x+y+z+w=1$.

8. The cathode material according to claim 1, wherein the cathode material has an EDM (Earth Mover's Distance) value of 0.071 or less as obtained using an SciPy's Wasserstein_distance function (u_values=particle distribution before rolling, v_values=particle distribution after rolling, u_weights=none, v_weights=none).

9. The cathode material according to claim 1, wherein the cathode material is a single particle.

10. The cathode material according to claim 1, wherein a surface of the cathode material is coated with a coating agent containing metal or carbon.

11. A secondary battery, comprising the cathode material according to any one of claims 1 to 10.

12. A method of measuring a particle strength of a cathode material, comprising:

   A) measuring a rolling density of a cathode material using a powder resistance meter at a load of 0 kgf to 2,000 kgf, or a load of 0 kgf or more to less than 2,000 kgf;
   B) measuring a rolling density of the cathode material using a hydraulic press machine at a load of greater than 2,000 kgf or a load of 2,000 kgf or more; and
   C) using the rolling density of the cathode material measured in steps A) and B) to measure an absolute value difference (del_PD_absolute) between an ideal value and measured value of the rolling density, a normalized value difference (del_PD) between an ideal value and measured value of the rolling density, an inclination difference (del_inclination) value between an ideal value and measured value of the rolling density, or particle distribution before and after rolling and using an SciPy's Wasserstein_distance function (u_values=particle distribution before rolling, v_values=particle distribution after rolling, u_weights=none, v_weights=none) to obtain EMD.

13. The method according to claim 12, wherein the cathode material is a compound represented by Chemical Formula 1 below:

   [Chemical Formula 1]     $Li_aNi_xMn_yCo_zM_wO_{2+\delta}$,

   wherein M comprises one or more selected from the group consisting of B, W, Al, Ti, and Mg; and $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x+y+z+w=1$.

14. The method according to claim 12, wherein the particle is a single particle.

15. The method according to claim 12, wherein, in step B), a rolling density of a cathode material is measured using a hydraulic press machine at a load of greater than 2,000 kgf to 9,000 kgf or less, or a load of 2,000 kgf to 9,000 kgf.

FIG. 1

- Del_PD = 0.24367
- Del_PD_absolute =1.11541
- Del_inclin= 0.15934
- (1-del_PD)/EMD = 20.3146

FIG. 2

- Del_PD = 0.0935
- Del_PD_absolute =0.35185
- Del_inclin= 0.05026
- (1-del_PD)/EMD = 1.9205

FIG. 3

FIG. 4

**EXAMPLE 1**

## FIG. 5

COMPARATIVE EXAMPLE 2

## FIG. 6

## INTERNATIONAL SEARCH REPORT

International application No.

**PCT/KR2024/013000**

| A. | CLASSIFICATION OF SUBJECT MATTER |
|---|---|

**H01M 4/525**(2010.01)i; **H01M 4/505**(2010.01)i; **H01M 4/58**(2010.01)i; **H01M 4/36**(2006.01)i; **H01M 10/052**(2010.01)i; **C01G 53/00**(2006.01)i; **G01N 9/02**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); C01G 53/00(2006.01); H01M 10/052(2010.01); H01M 10/0525(2010.01); H01M 4/131(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극재 (cathode material), 압연밀도 (pellet density), 단입자 (single particle), 모노모달 (monomodal), 코발트 (Co), 망간 (Mn), 니켈 (Ni), 입자강도 (particle strength)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | KR 10-2019-0131842 A (LG CHEM, LTD.) 27 November 2019 (2019-11-27)<br>See abstract; paragraphs [0044]-[0055], [0148]-[0153] and [0188]; table 1; and claims 1-20. | 1-15 |
| A | KR 10-2019-0139033 A (LG CHEM, LTD.) 17 December 2019 (2019-12-17)<br>See abstract; and claims 1-18. | 1-15 |
| A | WO 2022-119157 A1 (ECOPRO BM CO., LTD.) 09 June 2022 (2022-06-09)<br>See abstract; and claims 1-9. | 1-15 |
| A | KR 10-2017-0100534 A (QUANTUMSCAPE CORPORATION) 04 September 2017 (2017-09-04)<br>See abstract; and claim 1. | 1-15 |
| A | KR 10-2022-0127242 A (SUMITOMO CHEMICAL CO., LTD.) 19 September 2022 (2022-09-19)<br>See abstract; and claims 1-20. | 1-15 |

✓ Further documents are listed in the continuation of Box C.    ✓ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 December 2024** | **10 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/013000**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2019-0051863 A (LG CHEM, LTD.) 15 May 2019 (2019-05-15)<br>See paragraphs [0301]-[0305]. | 1-15 |

Form PCT/ISA/210 (second sheet) (July 2022)

## INTERNATIONAL SEARCH REPORT
### Information on patent family members

International application No.

**PCT/KR2024/013000**

| Patent document cited in search report | | | Publication date (day/month/year) | Patent family member(s) | | | Publication date (day/month/year) |
|---|---|---|---|---|---|---|---|
| KR | 10-2019-0131842 | A | 27 November 2019 | CN | 111819718 | A | 23 October 2020 |
| | | | | CN | 118099413 | A | 28 May 2024 |
| | | | | EP | 3751646 | A1 | 16 December 2020 |
| | | | | EP | 3751646 | B1 | 24 April 2024 |
| | | | | EP | 4339164 | A2 | 20 March 2024 |
| | | | | EP | 4339164 | A3 | 12 June 2024 |
| | | | | HU | E066540 | T2 | 28 August 2024 |
| | | | | JP | 2021-516424 | A | 01 July 2021 |
| | | | | JP | 7139008 | B2 | 20 September 2022 |
| | | | | KR | 10-2022-0132491 | A | 30 September 2022 |
| | | | | KR | 10-2539694 | B1 | 02 June 2023 |
| | | | | PL | 3751646 | T3 | 15 July 2024 |
| | | | | US | 2021-0135187 | A1 | 06 May 2021 |
| | | | | US | 2024-0258499 | A1 | 01 August 2024 |
| | | | | WO | 2019-221497 | A1 | 21 November 2019 |
| KR | 10-2019-0139033 | A | 17 December 2019 | CN | 111742431 | A | 02 October 2020 |
| | | | | CN | 111742431 | B | 10 October 2023 |
| | | | | EP | 3742533 | A1 | 25 November 2020 |
| | | | | JP | 2021-514524 | A | 10 June 2021 |
| | | | | JP | 7191342 | B2 | 19 December 2022 |
| | | | | KR | 10-2288292 | B1 | 10 August 2021 |
| | | | | US | 11973209 | B2 | 30 April 2024 |
| | | | | US | 2021-0005875 | A1 | 07 January 2021 |
| | | | | WO | 2019-235885 | A1 | 12 December 2019 |
| WO | 2022-119157 | A1 | 09 June 2022 | CN | 116250101 | A | 09 June 2023 |
| | | | | CN | 116325223 | A | 23 June 2023 |
| | | | | CN | 116325224 | A | 23 June 2023 |
| | | | | CN | 116325225 | A | 23 June 2023 |
| | | | | CN | 116325226 | A | 23 June 2023 |
| | | | | CN | 116670853 | A | 29 August 2023 |
| | | | | EP | 4216311 | A1 | 26 July 2023 |
| | | | | EP | 4216312 | A1 | 26 July 2023 |
| | | | | EP | 4231389 | A1 | 23 August 2023 |
| | | | | EP | 4258386 | A1 | 11 October 2023 |
| | | | | EP | 4258387 | A1 | 11 October 2023 |
| | | | | EP | 4258388 | A1 | 11 October 2023 |
| | | | | JP | 2023-544060 | A | 19 October 2023 |
| | | | | JP | 2023-544135 | A | 20 October 2023 |
| | | | | JP | 2023-544136 | A | 20 October 2023 |
| | | | | JP | 2023-544137 | A | 20 October 2023 |
| | | | | JP | 2023-544339 | A | 23 October 2023 |
| | | | | JP | 2023-551720 | A | 12 December 2023 |
| | | | | KR | 10-2022-0079404 | A | 13 June 2022 |
| | | | | KR | 10-2022-0079408 | A | 13 June 2022 |
| | | | | KR | 10-2022-0079409 | A | 13 June 2022 |
| | | | | KR | 10-2022-0079427 | A | 13 June 2022 |
| | | | | KR | 10-2022-0079429 | A | 13 June 2022 |
| | | | | KR | 10-2022-0079430 | A | 13 June 2022 |
| | | | | KR | 10-2024-0118719 | A | 05 August 2024 |
| | | | | KR | 10-2689920 | B1 | 30 July 2024 |

Form PCT/ISA/210 (patent family annex) (July 2022)

## INTERNATIONAL SEARCH REPORT
### Information on patent family members

| International application No. |
| --- |
| **PCT/KR2024/013000** |

| Patent document cited in search report | Publication date (day/month/year) | Patent family member(s) | | | Publication date (day/month/year) |
| --- | --- | --- | --- | --- | --- |
| | | KR | 10-2689933 | B1 | 30 July 2024 |
| | | KR | 10-2689934 | B1 | 30 July 2024 |
| | | US | 2023-0231128 | A1 | 20 July 2023 |
| | | US | 2023-0261179 | A1 | 17 August 2023 |
| | | US | 2023-0268497 | A1 | 24 August 2023 |
| | | US | 2023-0369566 | A1 | 16 November 2023 |
| | | US | 2023-0369571 | A1 | 16 November 2023 |
| | | US | 2023-0387403 | A1 | 30 November 2023 |
| | | WO | 2022-119156 | A1 | 09 June 2022 |
| | | WO | 2022-119158 | A1 | 09 June 2022 |
| | | WO | 2022-119336 | A1 | 09 June 2022 |
| | | WO | 2022-119338 | A1 | 09 June 2022 |
| | | WO | 2022-119344 | A1 | 09 June 2022 |
| KR 10-2017-0100534 A | 04 September 2017 | CN | 107210419 | A | 26 September 2017 |
| | | CN | 107210419 | B | 08 June 2021 |
| | | CN | 113394392 | A | 14 September 2021 |
| | | EP | 3238290 | A1 | 01 November 2017 |
| | | EP | 3238290 | B1 | 01 May 2024 |
| | | JP | 2018-505521 | A | 22 February 2018 |
| | | KR | 10-2591083 | B1 | 18 October 2023 |
| | | US | 10199649 | B2 | 05 February 2019 |
| | | US | 2016-0211517 | A1 | 21 July 2016 |
| | | WO | 2016-106321 | A1 | 30 June 2016 |
| KR 10-2022-0127242 A | 19 September 2022 | CN | 114982015 | A | 30 August 2022 |
| | | EP | 4092784 | A1 | 23 November 2022 |
| | | JP | 2021-114406 | A | 05 August 2021 |
| | | JP | 6734491 | B1 | 05 August 2020 |
| | | US | 2023-0118425 | A1 | 20 April 2023 |
| | | WO | 2021-145438 | A1 | 22 July 2021 |
| KR 10-2019-0051863 A | 15 May 2019 | CN | 110574194 | A | 13 December 2019 |
| | | CN | 110574194 | B | 03 June 2022 |
| | | CN | 110582875 | A | 17 December 2019 |
| | | CN | 110582875 | B | 21 April 2023 |
| | | CN | 111213264 | A | 29 May 2020 |
| | | CN | 111213264 | B | 24 June 2022 |
| | | EP | 3609002 | A2 | 12 February 2020 |
| | | EP | 3609003 | A1 | 12 February 2020 |
| | | EP | 3609003 | B1 | 12 June 2024 |
| | | EP | 3683873 | A2 | 22 July 2020 |
| | | EP | 3683873 | B1 | 12 April 2023 |
| | | JP | 2020-525990 | A | 27 August 2020 |
| | | JP | 2020-532842 | A | 12 November 2020 |
| | | JP | 2020-537324 | A | 17 December 2020 |
| | | JP | 7045549 | B2 | 01 April 2022 |
| | | JP | 7045586 | B2 | 01 April 2022 |
| | | JP | 7047217 | B2 | 05 April 2022 |
| | | KR | 10-2019-0051862 | A | 15 May 2019 |
| | | KR | 10-2019-0051864 | A | 15 May 2019 |
| | | KR | 10-2264736 | B1 | 15 June 2021 |
| | | KR | 10-2460353 | B1 | 31 October 2022 |

Form PCT/ISA/210 (patent family annex) (July 2022)

**INTERNATIONAL SEARCH REPORT**
Information on patent family members

International application No.

**PCT/KR2024/013000**

| Patent document cited in search report | Publication date (day/month/year) | Patent family member(s) | | | Publication date (day/month/year) |
|---|---|---|---|---|---|
| | | US | 11258056 | B2 | 22 February 2022 |
| | | US | 11532807 | B2 | 20 December 2022 |
| | | US | 2020-0083524 | A1 | 12 March 2020 |
| | | US | 2020-0119341 | A1 | 16 April 2020 |
| | | US | 2020-0343536 | A1 | 29 October 2020 |
| | | WO | 2019-088805 | A2 | 09 May 2019 |
| | | WO | 2019-088805 | A3 | 20 June 2019 |
| | | WO | 2019-088806 | A1 | 09 May 2019 |
| | | WO | 2019-088807 | A2 | 09 May 2019 |
| | | WO | 2019-088807 | A3 | 20 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230116895
- KR 1020230116896
- KR 1020240116537
- KR 1020240116538

**Non-patent literature cited in the description**

- **XIANGBANG KONG** ; **YIGE ZHANG** ; **SHIYUN PENG** ; **JING ZENG** ; **JINBAO ZHAO**. Superiority of Single-Crystal to Polycrystalline LiNixCoyMn1-x-yO2 Cathode Materials in Storage Behaviors for Lithium-Ion Batteries. *ACS Sustainable Chem. Eng.*, 2020, vol. 8, 14938-14948